# EUROPÄISCHE PATENTANMELDUNG

(11) **EP 2 251 557 A1**
(43) Veröffentlichungstag der Anmeldung: **17.11.2010**
(21) Anmeldenummer: 09006590.5
(22) Anmeldetag: 15.05.2009
(51) Int. Cl.: F16D 1/094

(54) **Spannsatz zur Übertragung von Drehmomenten**

(71) Anmelder: Ringfeder Power-Transmission GmbH, 47807 Krefeld (DE)
(72) Erfinder: Moka, Thomas, 63322 Rödermark (DE); Peter, Rainer, 47877 Willich (DE)
(74) Vertreter: DR. STARK & PARTNER

(57) **Zusammenfassung**

Die Erfindung einen Spannsatz, der ein inneres Federelement mit kegelförmigen Außenflächen sowie ein konzentrisch zum und in radialer Richtung im Abstand vom inneren Federelement angeordnetes äußeres ringförmiges Federelement mit kegelförmigen Innenflächen aufweist, wobei der Spannsatz mittels beidseitig achsparallel eingesetzter und durch Schrauben miteinander verbundene Druckringe verspannbar ist, wobei der vordere Druckring gleichmäßig über den Umfang verteilt angeordnete Durchgangsbohrungen für die Schrauben aufweist und der hintere Druckring mit gleichmäßig über den Umfang verteilt angeordneten Gewindebohrungen für die Schrauben versehen ist.

Für einen verbesserten Spannsatz mit höherer Belastbarkeit soll einerseits die Länge (L) des Spannsatzes geringer als 150 mm, der Außendurchmesser (D) des Spannsatzes geringer als 800 mm sowie der Innendurchmesser (d) des Spannsatzes geringer als 700 mm ausgebildet sein und andererseits die Stegbreite zwischen zwei benachbarten Bohrungen für die Schrauben an der engsten Stelle zumindest ca. 2/3 des Bohrungsdurchmessers, insbesondere genau 2/3 des Bohrungsdurchmessers, und/oder ca. 2/3 des Bohrungsdurchmessers betragen.

## Beschreibung

Die Erfindung einen Spannsatz zur Übertragung von Drehmomenten zwischen einem zylindrischen Bauteil und einem dazu konzentrisch angeordneten Körper, wobei der Spannsatz ein auf dem zylindrischen Bauteil aufliegendes inneres Federelement mit kegelförmigen Außenflächen sowie ein konzentrisch zum und in radialer Richtung im Abstand vom inneren Federelement angeordnetes äußeres ringförmiges Federelement mit kegelförmigen Innenflächen aufweist, und wobei der Spannsatz mittels beidseitig achsparallel eingesetzter und durch als Schrauben ausgebildete Spannmittel miteinander verbundene Druckringe verspannbar ist, wobei der vordere Druckring gleichmäßig über den Umfang verteilt angeordnete Durchgangsbohrungen für die Schrauben aufweist und der hintere Druckring mit gleichmäßig über den Umfang verteilt angeordneten Gewindebohrungen für die Schrauben versehen ist.

Aus der Praxis sind derartige Spannsätze in verschiedensten Ausführungsformen bekannt. Ausschlaggebend für den jeweiligen Einsatzzweck sind insbesondere die geometrischen Abmessungen des Spannsatzes, anhand derer sich bestimmt, ob der Spannsatz vom Durchmesser her beispielsweise auf die jeweilige Wellen passt und die Länge für die konkrete Einbausituation klein genug ist.

Nachteilig hierbei ist, dass eine entsprechend geringe Länge eine geringere Belastbarkeit hinsichtlich auftretender Biegemomente bewirkt.

Aufgabe der Erfindung ist es, die vorgenannten Nachteile zu vermeiden und einen verbesserten Spannsatz anzugeben, der bei gegebenen geometrischen Randbedingen eine höhere Belastbarkeit, insbesondere hinsichtlich auftretender Biegemomente, bewirkt.

Diese Aufgabe wird dadurch gelöst, dass einerseits die Länge (L) des Spannsatzes geringer als 150 mm, der Außendurchmesser (D) des Spannsatzes geringer als 800 mm sowie der Innendurchmesser (d) des Spannsatzes geringer als 700 mm ausgebildet ist und andererseits die Stegbreite zwischen zwei benachbarten Bohrungen für die Schrauben an der engsten Stelle zumindest ca. 2/3 des Bohrungsdurchmessers, insbesondere genau 2/3 des Bohrungsdurchmessers, und/oder ca. 2/3 des Bohrungsdurchmessers beträgt. Durch das insoweit gegenüber vorbekannten Spannsätzen vergrößerte Material zwischen den Bohrungen resultieren niedrigere Spannungen im Spannsatz selbst bei annähernd gleichem übertragbaren Torsionsmoment. Es können höhere Biegemomente durchgeleitet werden und es kann eine Leistungserhöhung bei bestehenden Anlagen durch die verbesserten Spannsätze bei unveränderter Außengeometrie des Spannsatzes erzielt werden.

Dabei können die geometrischen Parameter Länge (L) und Außendurchmesser (D) sowie Innendurchmesser (d) des Spannsatzes jeweils entsprechend einer Zeile der nachstehend eingeblendeten Tabelle ausgebildet sein.

| **d** | **D** | **L** |
|---|---|---|
| 100 | 145 | 33 |
| 110 | 155 | 33 |
| 120 | 165 | 33 |
| 130 | 180 | 38 |
| 140 | 190 | 38 |
| 150 | 200 | 38 |
| 160 | 210 | 38 |
| 170 | 225 | 44 |
| 180 | 235 | 44 |
| 190 | 250 | 52 |
| 200 | 260 | 52 |
| 220 | 285 | 56 |
| 240 | 305 | 56 |
| 260 | 325 | 56 |
| 280 | 355 | 66 |
| 300 | 375 | 66 |
| 320 | 405 | 78 |
| 340 | 425 | 78 |
| 360 | 455 | 90 |
| 380 | 475 | 90 |
| 400 | 495 | 90 |
| 420 | 515 | 90 |
| 440 | 545 | 102 |
| 460 | 565 | 102 |
| 480 | 585 | 102 |
| 500 | 605 | 102 |
| 520 | 630 | 102 |
| 540 | 650 | 102 |
| 560 | 670 | 102 |
| 580 | 690 | 102 |
| 600 | 710 | 102 |
| 620 | 730 | 102 |
| 640 | 750 | 102 |

Auch können die geometrischen Parameter Länge (L) und Außendurchmesser (D) sowie Innendurchmesser (d) des Spannsatzes sowie Länge des äußeren/inneren Federelementes (1) und Länge einschließlich Schraubenkopf (L1) sowie Bohrkreisdurchmesser (d1) des Spannsatzes jeweils entsprechend einer Zeile der nachstehend eingeblendeten Tabelle ausgebildet sein.

| **d** | **D** | **L** | **I** | **L1** | **d1** |
|---|---|---|---|---|---|
| 100 | 145 | 33 | 26 | 47 | ∅ 122,5 |
| 110 | 155 | 33 | 26 | 47 | ∅ 132,5 |
| 120 | 165 | 33 | 26 | 47 | ∅ 142,5 |
| 130 | 180 | 38 | 34 | 52 | ∅ 155,0 |
| 140 | 190 | 38 | 34 | 52 | ∅ 165,0 |
| 150 | 200 | 38 | 34 | 52 | ∅ 175,0 |
| 160 | 210 | 38 | 34 | 52 | ∅ 185,0 |
| 170 | 225 | 44 | 38 | 60 | ∅ 197,5 |
| 180 | 235 | 44 | 38 | 60 | ∅ 207,5 |
| 190 | 250 | 52 | 46 | 68 | ∅ 220,0 |
| 200 | 260 | 52 | 46 | 68 | ∅ 230,0 |
| 220 | 285 | 56 | 50 | 74 | ∅ 252,5 |
| 240 | 305 | 56 | 50 | 74 | ∅ 272,5 |
| 260 | 325 | 56 | 50 | 74 | ∅ 292,5 |
| 280 | 355 | 66 | 60 | 86,5 | ∅ 317,5 |
| 300 | 375 | 66 | 60 | 86,5 | ∅ 337,5 |
| 320 | 405 | 78 | 72 | 100,5 | ∅ 362,5 |
| 340 | 425 | 78 | 72 | 100,5 | ∅ 382,5 |
| 360 | 455 | 90 | 84 | 116 | ∅ 407,5 |
| 380 | 475 | 90 | 84 | 116 | ∅ 427,5 |
| 400 | 495 | 90 | 84 | 116 | ∅ 447,5 |
| 420 | 515 | 90 | 84 | 116 | ∅ 467,5 |
| 440 | 545 | 102 | 96 | 130 | ∅ 492,5 |
| 460 | 565 | 102 | 96 | 130 | ∅ 512,5 |
| 480 | 585 | 102 | 96 | 130 | ∅ 532,5 |
| 500 | 605 | 102 | 96 | 130 | ∅ 552,5 |
| 520 | 630 | 102 | 96 | 130 | ∅ 575,0 |
| 540 | 650 | 102 | 96 | 130 | ∅ 595,0 |
| 560 | 670 | 102 | 96 | 130 | ∅ 615,0 |
| 580 | 690 | 102 | 96 | 130 | ∅ 635,0 |
| 600 | 710 | 102 | 96 | 130 | ∅ 655,0 |
| 620 | 730 | 102 | 96 | 130 | ∅ 675.0 |
| 640 | 750 | 102 | 96 | 130 | ∅ 695.0 |

Weiterhin können die geometrischen Parameter Außendurchmesser (D) und Innendurchmesser (d) sowie Bohrkreisdurchmesser (d1) des Spannsatzes und Gewindedurchmesser (M) sowie Schraubenstückzahl (Stk) jeweils entsprechend einer Zeile der nachstehend eingeblendeten Tabelle ausgebildet sein.

| d | D | d1 | M | Stk |
|---|---|---|---|---|
| 100 | 145 | ∅ 122,5 | M12 | 13 |
| 110 | 155 | ∅ 132,5 | M12 | 13 |
| 120 | 165 | ∅ 142,5 | M12 | 15 |
| 130 | 180 | ∅ 155,0 | M12 | 19 |
| 140 | 190 | ∅ 165,0 | M12 | 21 |
| 150 | 200 | ∅ 175,0 | M12 | 23 |
| 160 | 210 | ∅ 185,0 | M12 | 25 |
| 170 | 225 | ∅ 197,5 | M14 | 21 |
| 180 | 235 | ∅ 207,5 | M14 | 23 |
| 190 | 250 | ∅ 220,0 | M14 | 27 |
| 200 | 260 | ∅ 230,0 | M14 | 28 |
| 220 | 285 | ∅ 252,5 | M16 | 25 |
| 240 | 305 | ∅ 272,5 | M16 | 26 |
| 260 | 325 | ∅ 292,5 | M16 | 30 |
| 280 | 355 | ∅ 317,5 | M18 | 29 |
| 300 | 375 | ∅ 337,5 | M18 | 30 |
| 320 | 405 | ∅ 362,5 | M20 | 30 |
| 340 | 425 | ∅ 382,5 | M20 | 31 |
| 360 | 455 | ∅ 407,5 | M22 | 32 |
| 380 | 475 | ∅ 427,5 | M22 | 33 |
| 400 | 495 | ∅ 447,5 | M22 | 34 |
| 420 | 515 | ∅ 467,5 | M22 | 37 |
| 440 | 545 | ∅ 492,5 | M24 | 37 |
| 460 | 565 | ∅ 512,5 | M24 | 38 |
| 480 | 585 | ∅ 532,5 | M24 | 39 |
| 500 | 605 | ∅ 552,5 | M24 | 41 |
| 520 | 630 | ∅ 575,0 | M24 | 42 |
| 540 | 650 | ∅ 595,0 | M24 | 43 |
| 560 | 670 | ∅ 615,0 | M24 | 45 |
| 580 | 690 | ∅ 635,0 | M24 | 47 |
| 600 | 710 | ∅ 655,0 | M24 | 48 |
| 620 | 730 | ∅ 675,0 | M24 | 49 |
| 640 | 750 | ∅ 695,0 | M24 | 52 |
| 660 | 770 | ∅ 715,0 | M24 | 54 |
| 680 | 790 | ∅ 735,0 | M24 | 54 |
| 700 | 810 | ∅ 755,0 | M24 | 54 |
| 720 | 830 | ∅ 775,0 | M24 | 54 |
| 740 | 850 | ∅ 795,0 | M24 | 56 |
| 760 | 870 | ∅ 815,0 | M24 | 58 |
| 780 | 890 | ∅ 835,0 | M24 | 59 |
| 800 | 910 | ∅ 855,0 | M24 | 60 |

Vorzugsweise können der Kegelwinkel der Außenflächen des inneren Federelements und der Kegelwinkel der Innenflächen des äußeren Federelements geringer als 14°, insbesondere geringer als 12°, sein, so dass durch längere Druckringe mit flacheren Kegelwinkeln geringere Spannungen gegenüber Standardspannsätzen möglich sind. Weiterhin resultieren geringere Relativbewegeungen.

Erfindungsgemäß können die Druckringe aus Stahl mit einer Streckgrenze von wenigstens 750 N/mm², insbesondere zumindest 850 N/mm², vorzugsweise bei einer Mindestdehnung von wenigstens 8%, gefertigt sein.

Auch können die Schrauben der Qualität 13.9 (Zugfestigkeit: mindestens 1200 N/mm², insbesondere mindestens 1300 N/mm²; Streckgrenze: mindestens 1080 N/mm², insbesondere mindestens 1180 N/mm²) entsprechen, so dass höhere Reserven gegen Bruch gegeben sind.

Vorteilhafterweise können die Schrauben als Dehnschrauben ausgebildet sein.

Erfindungsgemäß kann zumindest die Außenflächen des inneren Federelements, insbesondere das gesamte innere Federelement, gaskarboniert sein, um somit Passungsrost vorzubeugen bzw. diesen zu vermeiden.

Hierzu können auch zumindest die Innenflächen des äußeren Federelements, insbesondere das gesamte äußere Federelement, gaskarboniert sein, und/oder die dem inneren Federelement zugewandte Fläche und/oder zumindest die dem äußeren Federelement zugewandte Fläche des Druckrings, insbesondere der gesamte Druckring.

Vorzugsweise kann zumindest ein Druckring eine eingepresste Buchse, insbesondere eine hochvergütete Buchse mit einer Streckgrenze von über 1000 N/mm², aufweisen.

Dabei kann zumindest eine Buchse mit einem Bund zur Sicherung gegen Herauswandern versehen sein.

Auch kann die Kontaktfläche des äußeren Federelements zur Nabenbohrung soweit reduziert sein, dass die Flächenpressung des inneren Federelements auf der Welle und die Flächenpressung des äußeren Federelementes in der Nabenbohrung in etwa übereinstimmen.

Erfindungsgemäß kann der der vordere Druckring ca. 20 % länger als der hintere Druckring ausgebildet sein, so dass in beiden Druckringen die gleichen Spannungen zwischen den Bohrungen auftreten.

Auch können der Kegelwinkel des vorderen Druckrings sowie der entsprechende Kegelwinkel des inneren Federelements und der entsprechende Kegelwinkel des äußeren Federelements zumindest 20% steiler sein als der Kegelwinkel des hinteren Druckrings sowie der entsprechende Kegelwinkel des inneren Federelements und der entsprechende Kegelwinkel des äußeren Federelements.

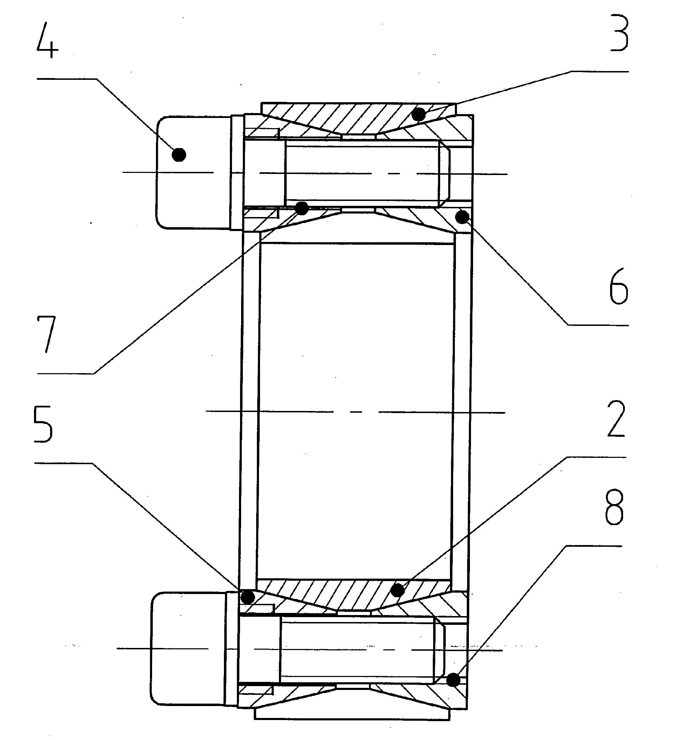

Im Folgenden wird ein in der Zeichnung dargestelltes Ausführungsbeispiel der Erfindung erläutert. Die einzige Figur zeigt einen erfindungsgemäßen Spannsatz 1.

Der Spannsatz 1 umfasst ein inneres Federelement 2 mit kegelförmigen Außenflächen sowie ein konzentrisch zu diesem und in radialer Richtung im Abstand vom inneren Federelement 2 angeordnetes äußeres ringförmiges Federelement 3.

Der Spannsatz 1 ist mittels beidseitig achsparallel eingesetzter Druckringe 5, 6 verspannbar, die durch als Schrauben 4 ausgebildete Spannmittel miteinander verbunden sind. Hierzu weist der vordere Druckring 5 gleichmäßig über den Umfang verteilt angeordnete Durchgangsbohrungen 7 für die Schrauben 4 auf und der hintere Druckring 6 ist mit ebenfalls und entsprechend gleichmäßig über den Umfang verteilt angeordneten Gewindebohrungen 8 für die Schrauben 4 versehen.

## Patentansprüche

**1.** Spannsatz (1) zur Übertragung von Drehmomenten zwischen einem zylindrischen Bauteil und einem dazu konzentrisch angeordneten Körper, wobei der Spannsatz (1) ein auf dem zylindrischen Bauteil aufliegendes inneres Federelement (2) mit kegelförmigen Außenflächen sowie ein konzentrisch zum und in radialer Richtung im Abstand vom inneren Federelement (2) angeordnetes äußeres ringförmiges Federelement (3) mit kegelförmigen Innenflächen aufweist, und wobei der Spannsatz (1) mittels beidseitig achsparallel eingesetzter und durch als Schrauben (4) ausgebildete Spannmittel miteinander verbundene Druckringe (5, 6) verspannbar ist, wobei der vordere Druckring (5) gleichmäßig über den Umfang verteilt angeordnete Durchgangsbohrungen (7) für die Schrauben (4) aufweist und der hintere Druckring (6) mit gleichmäßig über den Umfang verteilt angeordneten Gewindebohrungen (8) für die Schrauben (4) versehen ist, **dadurch gekennzeichnet, dass** einerseits die Länge (L) des Spannsatzes (1) geringer als 150 mm, der Außendurchmesser (D) des Spannsatzes (1) geringer als 800 mm sowie der Innendurchmesser (d) des Spannsatzes (1) geringer als 700 mm ausgebildet ist und andererseits die Stegbreite zwischen zwei benachbarten Bohrungen (7, 8) für die Schrauben (4) an der engsten Stelle zumindest ca. 2/3 des Bohrungsdurchmessers, insbesondere genau 2/3 des Bohrungsdurchmessers, und/oder ca. 2/3 des Bohrungsdurchmessers beträgt.

**2.** Spannsatz (1) nach dem vorhergehenden Anspruch, **dadurch gekennzeichnet, dass** die geometrischen Parameter Länge (L) und Außendurchmesser (D) sowie Innendurchmesser (d) des Spannsatzes (1) jeweils entsprechend einer Zeile der nachstehend eingeblendeten Tabelle ausgebildet sind
| **d** | **D** | **L** |
|---|---|---|
| 100 | 145 | 33 |
| 110 | 155 | 33 |
| 120 | 165 | 33 |
| 130 | 180 | 38 |
| 140 | 190 | 38 |
| 150 | 200 | 38 |
| 160 | 210 | 38 |
| 170 | 225 | 44 |
| 180 | 235 | 44 |
| 190 | 250 | 52 |
| 200 | 260 | 52 |
| 220 | 285 | 56 |
| 240 | 305 | 56 |
| 260 | 325 | 56 |
| 280 | 355 | 66 |
| 300 | 375 | 66 |
| 320 | 405 | 78 |
| 340 | 425 | 78 |
| 360 | 455 | 90 |
| 380 | 475 | 90 |
| 400 | 495 | 90 |
| 420 | 515 | 90 |
| 440 | 545 | 102 |
| 460 | 565 | 102 |
| 480 | 585 | 102 |
| 500 | 605 | 102 |
| 520 | 630 | 102 |
| 540 | 650 | 102 |
| 560 | 670 | 102 |
| 580 | 690 | 102 |
| 600 | 710 | 102 |
| 620 | 730 | 102 |
| 640 | 750 | 102 |

**3.** Spannsatz (1) nach Anspruch 1, **dadurch gekennzeichnet, dass** die geometrischen Parameter Länge (L) und Außendurchmesser (D) sowie Innendurchmesser (d) des Spannsatzes (1) sowie Länge des äußeren/inneren Federelementes (1) und Länge einschließlich Schraubenkopf (L1) sowie Bohrkreisdurchmesser (d1) des Spannsatzes (1) jeweils entsprechend einer Zeile der nachstehend eingeblendeten Tabelle ausgebildet sind
| **d** | **D** | **L** | **1** | **L1** | **d1** |
|---|---|---|---|---|---|
| 100 | 145 | 33 | 26 | 47 | ∅ 122,5 |
| 110 | 155 | 33 | 26 | 47 | ∅ 132,5 |
| 120 | 165 | 33 | 26 | 47 | ∅ 142.5 |
| 130 | 180 | 38 | 34 | 52 | ∅ 155,0 |
| 140 | 190 | 38 | 34 | 52 | ∅ 165,0 |
| 150 | 200 | 38 | 34 | 52 | ∅ 175,0 |
| 160 | 210 | 38 | 34 | 52 | ∅ 185,0 |
| 170 | 225 | 44 | 38 | 60 | ∅ 197,5 |
| 180 | 235 | 44 | 38 | 60 | ∅ 207,5 |
| 190 | 250 | 52 | 46 | 68 | ∅ 220,0 |
| 200 | 260 | 52 | 46 | 68 | ∅ 230,0 |
| 220 | 285 | 56 | 50 | 74 | ∅ 252,5 |
| 240 | 305 | 56 | 50 | 74 | ∅ 272,5 |
| 260 | 325 | 56 | 50 | 74 | ∅ 292,5 |
| 280 | 355 | 66 | 60 | 86.5 | ∅ 317,5 |
| 300 | 375 | 66 | 60 | 86,5 | ∅ 337,5 |
| 320 | 405 | 78 | 72 | 100,5 | ∅ 362,5 |
| 340 | 425 | 78 | 72 | 100,5 | ∅ 382.5 |
| 360 | 455 | 90 | 84 | 116 | ∅ 407,5 |
| 380 | 475 | 90 | 84 | 116 | ∅ 427,5 |
| 400 | 495 | 90 | 84 | 116 | ∅ 447,5 |
| 420 | 515 | 90 | 84 | 116 | ∅ 467,5 |
| 440 | 545 | 102 | 96 | 130 | ∅ 492,5 |
| 460 | 565 | 102 | 96 | 130 | ∅ 512,5 |
| 480 | 585 | 102 | 96 | 130 | ∅ 532,5 |
| 500 | 605 | 102 | 96 | 130 | ∅ 552.5 |
| 520 | 630 | 102 | 96 | 130 | ∅ 575,0 |
| 540 | 650 | 102 | 96 | 130 | ∅ 595,0 |
| 560 | 670 | 102 | 96 | 130 | ∅ 615,0 |
| 580 | 690 | 102 | 96 | 130 | ∅ 635,0 |
| 600 | 710 | 102 | 96 | 130 | ∅ 655,0 |
| 620 | 730 | 102 | 96 | 130 | ∅ 675.0 |
| 640 | 750 | 102 | 96 | 130 | ∅ 695.0 |

**3.** Spannsatz (1) nach einem der vorhergehenden Ansprüche, **dadurch gekennzeichnet, dass** die geometrischen Parameter Außendurchmesser (D) und Innendurchmesser (d) sowie Bohrkreisdurchmesser (d1) des Spannsatzes (1) und Gewindedurchmesser (M) sowie Schraubenstückzahl (Stk) jeweils entsprechend einer Zeile der nachstehend eingeblendeten Tabelle ausgebildet sind
| d | D | d1 | M | Stk |
|---|---|---|---|---|
| 100 | 145 | ∅ 122,5 | M 12 | 13 |
| 110 | 155 | ∅ 132,5 | M 12 | 13 |
| 120 | 165 | ∅ 142,5 | M 12 | 15 |
| 130 | 180 | ∅ 155,0 | M 12 | 19 |
| 140 | 190 | ∅ 165,0 | M 12 | 21 |
| 150 | 200 | ∅ 175,0 | M 12 | 23 |
| 160 | 210 | ∅ 185,0 | M 12 | 25 |
| 170 | 225 | ∅ 197,5 | M 14 | 21 |
| 180 | 235 | ∅ 207,5 | M 14 | 23 |
| 190 | 250 | ∅ 220,0 | M 14 | 27 |
| 200 | 260 | ∅ 230,0 | M 14 | 28 |
| 220 | 285 | ∅ 252,5 | M 16 | 25 |
| 240 | 305 | ∅ 272,5 | M 16 | 26 |
| 260 | 325 | ∅ 292,5 | M 16 | 30 |
| 280 | 355 | ∅ 317,5 | M 18 | 29 |
| 300 | 375 | ∅ 337,5 | M 18 | 30 |
| 320 | 405 | ∅ 362,5 | M 20 | 30 |
| 340 | 425 | ∅ 382,5 | M 20 | 31 |
| 360 | 455 | ∅ 407,5 | M 22 | 32 |
| 380 | 475 | ∅ 427,5 | M 22 | 33 |
| 400 | 495 | ∅ 447,5 | M 22 | 34 |
| 420 | 515 | ∅ 467,5 | M 22 | 37 |
| 440 | 545 | ∅ 492,5 | M 24 | 37 |
| 460 | 565 | ∅ 512,5 | M 24 | 38 |
| 480 | 585 | ∅ 532,5 | M 24 | 39 |
| 500 | 605 | ∅ 552,5 | M 24 | 41 |
| 520 | 630 | ∅ 575,0 | M 24 | 42 |
| 540 | 650 | ∅ 595,0 | M 24 | 43 |
| 560 | 670 | ∅ 615,0 | M 24 | 45 |
| 580 | 690 | ∅ 635,0 | M 24 | 47 |
| 600 | 710 | ∅ 655,0 | M 24 | 48 |
| 620 | 730 | ∅ 675,0 | M 24 | 49 |
| 640 | 750 | ∅ 695,0 | M 24 | 52 |
| 660 | 770 | ∅ 715,0 | M 24 | 54 |
| 680 | 790 | ∅ 735,0 | M 24 | 54 |
| 700 | 810 | ∅ 755,0 | M 24 | 54 |
| 720 | 830 | ∅ 775,0 | M 24 | 54 |
| 740 | 850 | ∅ 795,0 | M 24 | 56 |
| 760 | 870 | ∅ 815,0 | M 24 | 58 |
| 780 | 890 | ∅ 835,0 | M 24 | 59 |
| 800 | 910 | ∅ 855,0 | M 24 | 60 |

**4.** Spannsatz (1) nach einem der vorhergehenden Ansprüche, **dadurch gekennzeichnet, dass** der Kegelwinkel der Außenflächen des inneren Federelements (2) und der Kegelwinkel der Innenflächen des äußeren Federelements (3) geringer als 14°, insbesondere geringer als 12°, ist.

**5.** Spannsatz (1) nach einem der vorhergehenden Ansprüche, **dadurch gekennzeichnet, dass** die Druckringe (5, 6) aus Stahl mit einer Streckgrenze von wenigstens 750 N/mm², insbesondere zumindest 850 N/mm², vorzugsweise bei einer Mindestdehnung von wenigstens 8%, gefertigt sind.

**6.** Spannsatz (1) nach einem der vorhergehenden Ansprüche, **dadurch gekennzeichnet, dass** die Schrauben (4) der Qualität 13.9 entsprechen (Zugfestigkeit: mindestens 1200 N/mm², insbesondere mindestens 1300 N/mm²; Streckgrenze: mindestens 1080 N/mm², insbesondere mindestens 1180 N/mm²).

**7.** Spannsatz (1) nach einem der vorhergehenden Ansprüche, **dadurch gekennzeichnet, dass** die Schrauben (4) als Dehnschrauben ausgebildet sind.

**8.** Spannsatz (1) nach einem der vorhergehenden Ansprüche, **dadurch gekennzeichnet, dass** zumindest die Außenflächen des inneren Federelements (2), insbesondere das gesamte innere Federelement (2), gaskarboniert ist.

**9.** Spannsatz (1) nach einem der vorhergehenden Ansprüche, **dadurch gekennzeichnet, dass** zumindest die Innenflächen des äußeren Federelements (3), insbesondere das gesamte äußere Federelement (3), gaskarboniert ist

**10.** Spannsatz (1) nach einem der vorhergehenden Ansprüche, **dadurch gekennzeichnet, dass** zumindest die dem inneren Federelement (2) zugewandte Fläche und/oder zumindest die dem äußeren Federelement (3) zugewandte Fläche des Druckrings (5, 6), insbesondere der gesamte Druckring (5, 6), gaskarboniert ist.

**11.** Spannsatz (1) nach einem der vorhergehenden Ansprüche, **dadurch gekennzeichnet, dass** zumindest ein Druckring (5, 6) eine eingepresste Buchse, insbesondere eine hochvergütete Buchse mit einer Streckgrenze von über 1000 N/mm², aufweist.

**12.** Spannsatz (1) nach dem vorhergehenden Anspruch, **dadurch gekennzeichnet, dass** zumindest eine Buchse mit einem Bund versehen ist.

**13.** Spannsatz (1) nach einem der vorhergehenden Ansprüche, **dadurch gekennzeichnet, dass** die Kontaktfläche des äußeren Federelements (3) zur Nabenbohrung soweit reduziert ist, dass die Flächenpressung des inneren Federelements (2) auf der Welle und die Flächenpressung des äußeren Federelementes (3) in der Nabenbohrung in etwa übereinstimmen.

**14.** Spannsatz (1) nach einem der vorhergehenden Ansprüche, **dadurch gekennzeichnet, dass** der der vordere Druckring (5) ca. 20 % länger als der hintere Druckring (5) ausgebildet ist.

**15.** Spannsatz (1) nach einem der vorhergehenden Ansprüche, **dadurch gekennzeichnet, dass** der Kegelwinkel des vorderen Druckrings (5) sowie der entsprechende Kegelwinkel des inneren Federelements (2) und der entsprechende Kegelwinkel des äußeren Federelements (3) zumindest 20% steiler ist als der Kegelwinkel des hinteren Druckrings (6) sowie der entsprechende Kegelwinkel des inneren Federelements (2) und der entsprechende Kegelwinkel des äußeren Federelements (2).
